# EUROPÄISCHE PATENTANMELDUNG

(11) **EP 2 463 534 A2**
(43) Veröffentlichungstag der Anmeldung: **13.06.2012**
(21) Anmeldenummer: 11009538.7
(22) Anmeldetag: 02.12.2011
(51) Int. Cl.: F16C 11/06, B25B 27/02

(54) **Werkzeug zur Demontage eines Kugelkopfgelenks**

(30) Priorität: 09.12.2010 DE 102010054030
(71) Anmelder: Robert Sihn GmbH & Co. KG, 75223 Niefern-Öschelbronn (DE)
(72) Erfinder: Häußler, Harald, 71292 Friolzheim (DE); Borello, Andreas, 71665 Vaihingen/Enz (DE); Blank, Rainer, 76356 Weingarten (DE)
(74) Vertreter: Reinhardt, Harry

(57) **Zusammenfassung**

Ein Werkzeug (20) dient zur Demontage eines Kugelkopfgelenks, das einen in einer Kugelpfanne aufgenommenen Kugelkopf umfasst, der in seiner Gebrauchsposition mittels eines elastischen Sperrelements an der Kugelpfanne gesichert gelagert ist. Das Sperrelement ist an der Kugelpfanne zur bedarfsweisen Überführung in eine Demontageposition beweglich gelagert. Das Werkzeug weist stirnseitig einen Untergriff (13) zum Eingriff zwischen Kugelpfanne und Sperrelement auf. Dadurch, dass das Werkzeug stirnseitig ferner einen Aufnahmebereich (14) zur Führung des vom Untergriff untergriffenen Sperrelementes in die Demontageposition aufweist, wird ein Werkzeug zur Demontage eines Kugelkopfgelenks geschaffen, das auf einfache und günstige Weise eine Demontage des Kugelkopfgelenks ermöglicht, ohne dass es zu Beschädigungen am Kugelkopfgelenk kommt. (Fig. 3)

## Beschreibung

### Gebiet der Erfindung

Die Erfindung betrifft ein Werkzeug zur Demontage eines Kugelkopfgelenks nach dem Oberbegriff des Anspruches 1.

### Stand der Technik

Kugelkopfgelenke mit einem in einer Kugelpfanne aufgenommenen Kugelkopf kommen vielfach z.B. bei Klappenöffnungen zum Einsatz, z.B. im Fahrzeugbereich an Heckklappen oder am Handschuhfach. In einer Kugelpfanne ist der Kugelkopf gelagert und wird dort über ein Sperrelement, wie z.B. eine Bügelfeder oder dergleichen gesichert. Die Hersteller sichern dabei entsprechende Haltekräfte zu. Im Einsatz ist es jedoch immer wieder erforderlich, z.B. bei Reparaturen derartige Kugelkopfgelenke zu demontieren. Dies erfolgt in der Praxis dadurch, dass das Werkstattpersonal das Sperrelement mit einem "normalen" Schlitzschraubendreher nach oben aushebelt, was leicht zu einer plastischen Verformung des Sperrelementes führt. Ist das Sperrelement jedoch einmal verbogen, können die vom Hersteller ursprünglich zugesicherten Haltekräfte nicht mehr zuverlässig aufgebracht werden. Im Schadensfall stellt sich dann schnell die Verschuldensfrage. Ferner besteht bei Verwendung eines Schlitzschraubendrehers die Gefahr, dass dieser "durchrutscht", was zu Beschädigungen beim Oberflächenschutz des Sperrelementes oder zu Beschädigungen an der Kugelpfanne führt.

Um dieser Problematik Herr zu werden, wurde z.B. in der DE 10 2006 020 103 A1 oder auch in der DE 20 2009 005 817 U1 bereits vorgeschlagen, die Sperrelemente so weit nach außen zu verlagern, dass sich eine Montage- und eine Demontageposition ergibt. Zudem sind entsprechende Ausnehmungen zum Einsatz eines einfachen Werkzeuges wie eines Schraubendrehers vorgesehen. Gleichwohl kann es auch bei diesen Lösungen zu Verformungen des Sperrelementes kommen. Vergleichbar aufwendige Lösungen finden sich in der DE 10 2007 061 640 A1 oder der DE 196 40 504 C2. In allen Fällen werden einfache Werkzeuge und Hebelwerkzeuge zur Demontage des Kugelkopfes verwendet.

### Offenbarung der Erfindung

Ausgehend von diesem Stand der Technik liegt der vorliegenden Erfindung die Aufgabe zugrunde, ein Werkzeug zur Demontage eines Kugelkopfgelenks zu schaffen, das auf einfache und günstige Weise eine Demontage des Kugelkopfgelenks ermöglicht, ohne dass es zu Beschädigungen am Kugelkopfgelenk kommt.

Diese Aufgabe wird durch ein Werkzeug zur Demontage eines Kugelkopfgelenks mit den Merkmalen des Anspruches 1 gelöst.

Das Werkzeug weist dazu wie auch ein üblicher Schraubendreher einen Untergriff auf, mit dem das Sperrelement untergriffen werden kann. Ergänzend ist jedoch ein Aufnahmebereich vorgesehen, so dass das Werkzeug mit dem Untergriff unter das Sperrelement geführt werden kann, dann jedoch das Sperrelement über einen größeren Bereich gefasst und in eine Demontageposition geführt werden kann. Diese geführte Bewegung ist schonender als ein Aushebeln mittels eines Schraubendrehers. Je nach Kugelkopfgelenk kann das Sperrelement verdreht oder z.B. in Nuten der Kugelpfanne so weit verschoben werden, bis es weitestgehend außer Eingriff mit dem Kugelkopf ist, so dass Kugelkopf und Kugelpfanne voneinander getrennt werden können. Die Gefahr einer bleibenden plastischen Verformung des Sperrelementes, wie z.B. einer Bügelfeder wird auf ein Minimum reduziert. Durch den durch den Aufnahmebereich gebildeten Anschlag des Sperrelements am Werkzeug wird gleichzeitig die Gefahr von Beschädigungen des galvanischen Oberflächenschutzes im Bereich der Bügelfeder gegenüber dem Aushebeln deutlich reduziert.

Der Aufnahmebereich ist bereits zur Führung ausgestaltet, vorzugsweise kann zudem das Werkzeug so ausgebildet sein, dass es einen Übergriff ausbildet, so dass sich zwischen Untergriff und Übergriff eine Nut bildet, die den durch die Aufnahmefläche bereits gebildeten Anschlag weiter konkretisiert. Dieser Anschlag vermeidet insbesondere ein "Durchrutschen" des Werkzeugs und ermöglicht ein sicheres "Halten" der Bügelfeder während der Demontage des Kugelkopfs.

Auf bevorzugte Weise kann das Werkzeug mit dem Untergriff unter die Bügelfeder geschoben werden. Durch die Keilform des Werkzeuges, die durch die sich verjüngenden Bereiche von Über- und Untergriff gebildet ist, wird die Bügelfeder zwar einerseits angehoben, kann jedoch dann mittels des Anschlages soweit bewegt und insbesondere verschoben werden, dass das Herauslösen des Kugelkopfs möglich ist.

Weitere Vorteile ergeben sich aus den Unteransprüchen und der nachfolgenden Beschreibung eines bevorzugten Ausführungsbeispiels.

### Kurzbeschreibung der Figuren

Im Folgenden wird die Erfindung anhand eines in den Figuren dargestellten Ausführungsbeispiels näher erläutert. Es zeigen:
- Fig. 1, 2: eine Draufsicht auf bzw. eine Stirnansicht des Werkzeugs,
- Fig. 3: eine isometrische Darstellung des Werkzeugs,
- Fig. 4a-4c: eine Ansicht der Kugelpfanne bei Anwendung des Werkzeugs,
- Fig. 5a-5c: die Vorgehensweise bei Verwendung des Werkzeuges an einem dreidimensional dargestellten Kugelkopfgelenk.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

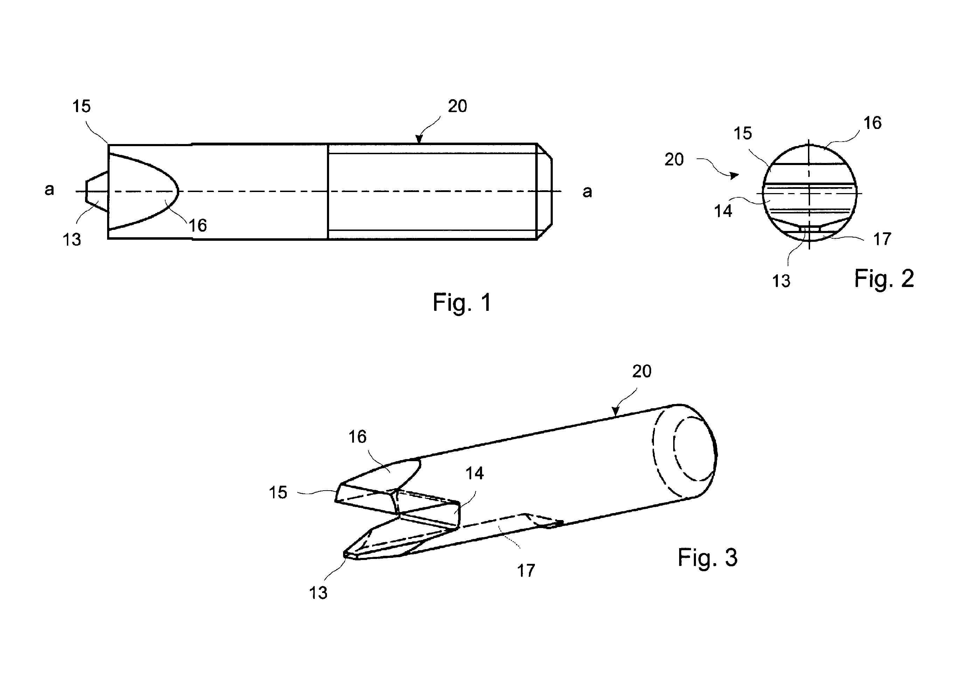

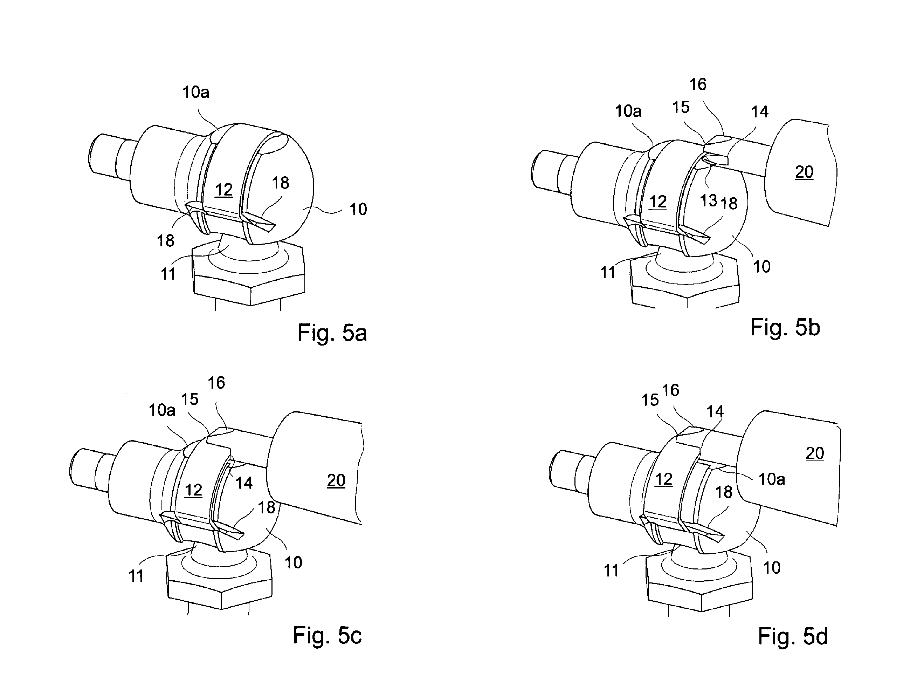

Die Figuren 1 bis 3 zeigen in verschiedenen Darstellungen ein Werkzeug 20 zur Demontage eines Kugelkopfgelenks, wie es im Ausgangszustand insbesondere in Fig. 5a dargestellt ist. Das Kugelkopfgelenk ist dadurch gebildet, dass in einer Kugelpfanne 10 ein Kugelkopf 11 aufgenommen ist. Damit dieser in seiner Gebrauchsposition zuverlässig mit der Kugelpfanne 10 zusammenwirkt, wird er mittels eines elastischen Sperrelementes 12 an der Kugelpfanne 10 gesichert gelagert. Das Sperrelement ist im Ausführungsbeispiel eine Bügelfeder, die in Nuten 18 der Kugelpfanne 10 verschieblich gelagert ist. Alternativ kann das Sperrelement auch auf andere Art und Weise beweglich gelagert sein, z.B. verdrehbar. Im Wesentlichen kommt es darauf an, dass das Sperrelement 12 aus einer Position, in der es die Lage des Kugelkopfes 11 in der Kugelpfanne 10 sichert, in eine Demontageposition überführt werden kann, in der die Kugelpfanne möglichst ohne Beschädigung der weiteren Elemente vom Kugelkopf getrennt werden kann. Das Sperrelement 12 ist an der Kugelpfanne 10 zur bedarfsweisen Überführung in die Demontageposition beweglich gelagert.

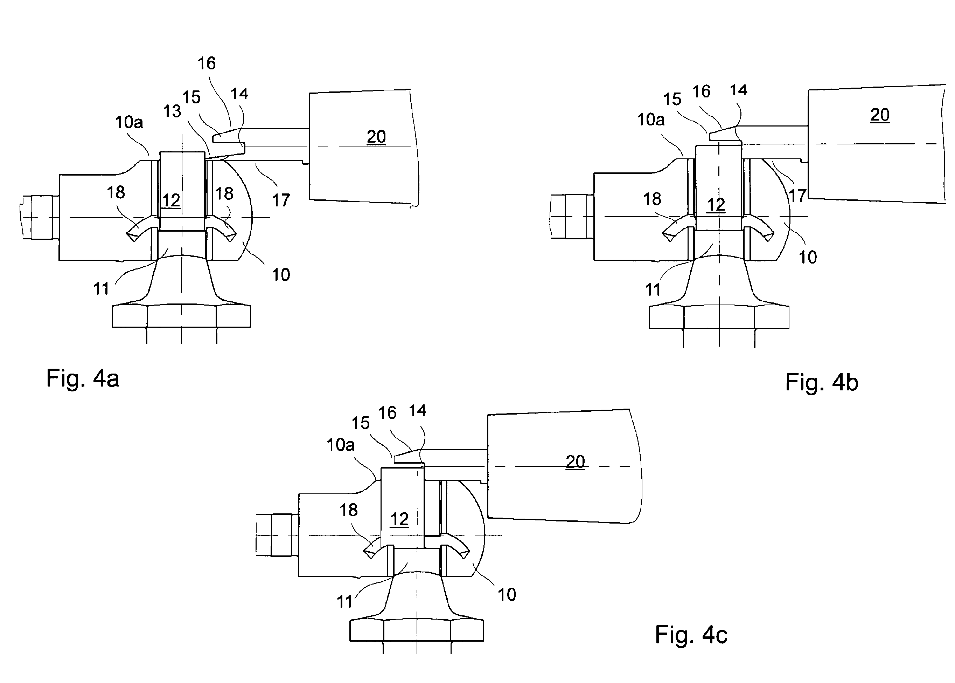

Gemäß den Figuren 1 bis 3 weist das Werkzeug 20 stirnseitig einen Untergriff 13 auf, der gemäß Fig. 1 den Übergriff 15 am Werkzeug stirnseitig überragt. Wenn im Folgenden dabei von unten oder oben die Rede ist, so bezieht sich dies auf die Anordnung des Werkzeuges, wie sie in Fig. 4a bis 4c dargestellt ist, d.h. das Werkzeug greift mit einem unten liegenden Untergriff 13 am Sperrelement 12 zwischen Kugelpfanne 10 und Sperrelement an. Das Werkzeug 20 weist ferner einen Aufnahmebereich 14 zur Führung des vom Untergriff 13 untergriffenen Sperrelementes 12 in die Demontageposition auf. Dieser Aufnahmebereich ist so ausgebildet, dass er grundsätzlich das Sperrelement 12 fassen und führen kann, so dass es kontrolliert in die Demontageposition überführt wird. Der Aufnahmebereich 14 ist durch eine quer zur Längsachse a-a des Werkzeugs stirnseitig angeordnete Nut gebildet, der auf der einen unteren Seite der Untergriff 13 und auf der anderen oberen Seite ein Übergriff 15 benachbart ist.

Wie insbesondere aus den Figuren 2 und 3 zu erkennen, sind Untergriff 13 und/oder Übergriff 15 so ausgebildet, dass sie sich zum vorderen Ende des Werkzeugs hin unter Aufweitung des Aufnahmebereichs 14 verjüngen. Der Untergriff 13 spitzt sich dabei nach vorne zu, um ein Einführen zwischen Kugelpfanne und Sperrelement 12 zu erleichtern. Das Werkzeug 20 ist ferner am Übergriff 15 außenseitig mit einer geneigten abgeflachten Fläche 16 versehen. Um die Führung des Werkzeuges z.B. an der Oberseite der Kugelpfanne zu verbessern. Wie aus den Figuren 4a bis 4c ersichtlich, weist das Werkzeug an der Außenseite des Untergriffes 13 eine sich parallel zur Längsachse a-a des Werkzeugs 20 erstreckende Abflachung 17 auf.

Die Figuren 4a bis 4c zeigen schematisch die Funktionsweise des Werkzeuges 20 in Seitenansicht. Das Werkzeug wird von rechts kommend mit der spitzen Seite des Untergriffs 13 unter das Sperrelement 12 geschoben. Durch die Keilform des Werkzeugs wird das Sperrelement 12 angehoben und kann im Anschluss durch Anlage am Aufnahmebereich 14, der insofern eine Anlagefläche ausbildet, so weit verschoben werden, dass das Herauslösen des Kugelkopfs 11 ermöglicht wird. Damit wird das Sperrelement 12 nicht nach oben ausgehebelt, sondern nur seitlich in den Nuten 18 der Kugelpfanne 10 verschoben.

Für die Demontage hat dies den Vorteil, dass eine bleibende Verformung des Sperrelements 12 auf ein Minimum reduziert wird. Die Nutform bildet einen Anschlag, der bei einem Schlitzschraubendreher nicht vorhanden ist. Dieser Anschlag vermeidet damit auch ein Durchrutschen des Werkzeuges, was gegebenenfalls zu weiteren Schäden am Kugelkopfgelenk führen kann. Die Gefahr von Beschädigungen des galvanischen Oberflächenschutzes im Bereich des Sperrelementes wird gegenüber dem Aushebeln mittels eines Schlitzschraubendrehers deutlich verringert.

Die konkrete Vorgehensweise wird nun anhand der Figuren 5a bis 5d genauer erläutert. Fig. 5a zeigt zunächst den Ausgangszustand, in dem die Kugelpfanne 10 auf den Kugelkopf 11 montiert ist. Zur Demontage wird gemäß Fig. 5b das Werkzeug 20 unter einem Winkel von 90° zur Drehachse des Kugelkopfes bzw. parallel zum Sperrelement 12 in dem Spalt zwischen der Abflachung 10a der Kugelpfanne 10 und dem Sperrelement angesetzt. Danach wird das Werkzeug weiter bis zum Anschlag des Sperrelementes 12 an dem Aufnahmebereich 14 unter das Sperrelement gemäß Fig. 5c geschoben. Das Sperrelement wird dann mittels des Werkzeugs über den Bund der Kugelpfanne nach hinten geschoben, d.h. über den Rand der Nut 18 für das Sperrelement 12 im Ausführungsbeispiel ca. 1,5 bis 2,5 mm weit. Die Demontage erfolgt dann durch ein langsames beidseitiges Drehen der Kugelpfanne 10 um ca. plus/minus 10° um die Drehachse der Kugelpfanne unter Zugkraft von Hand mit etwa 100 bis 250 Newton nach oben entlang der Achse des Kugelkopfes 11. Ein Biegemoment soll dabei über den Kugelkopf in die Kugelpfanne nicht eingeleitet werden. Das Werkzeug bleibt dabei in der Position gemäß Fig. 5c, so dass sich durch die Verschiebung eine Darstellung gemäß Fig. 5d ergibt, in der der Kugelkopf 11 aus der Kugelpfanne 10 entnommen werden kann.

Durch diese Vorgehensweise kann das Sperrelement auch bei einer Wiedermontage die erforderlichen Haltekräfte aufbringen. Zur Wiedermontage wird das Sperrelement von Hand zurück in die Nut 18 der Kugelpfanne 10 geschoben. Dabei ergibt sich ein spürbares Einrasten des Sperrelementes 12 in die Nut 18. Die Schenkel des Sperrelementes dürfen gegenüber dem Ausgangszustand nicht verformt sein. Vorzugsweise werden dann die Haltekräfte nochmals gemessen. Im Anschluss kann die Kugelpfanne 10 von Hand in den Kugelkopf 11 eingedrückt werden. Das Sperrelement darf dabei in seiner Bewegung nicht blockiert werden. Es ergibt sich ein hörbares Einschnappgeräusch.

Durch eine derartige Vorgehensweise ist sichergestellt, dass auch nach einer Demontage die ursprünglich vom Hersteller zugesicherten Haltekräfte gewährleistet werden können.

### Bezugszeichenliste

- 10: Kugelpfanne
- 10a: Abflachung
- 11: Kugelkopf
- 12: Sperrelement
- 13: Untergriff
- 14: Aufnahmebereich
- 15: Übergriff
- 16: Fläche
- 17: Abflachung
- 18: Nut
- 20: Werkzeug
- a-a: Längsachse

## Patentansprüche

1. Werkzeug (20) zur Demontage eines Kugelkopfgelenks, wobei das Kugelkopfgelenk einen in einer Kugelpfanne (10) aufgenommenen Kugelkopf (11) umfasst, der in seiner Gebrauchsposition mittels eines elastischen Sperrelements (12) an der Kugelpfanne (10) gesichert gelagert ist,
wobei das Sperrelement (12) an der Kugelpfanne (10) zur bedarfsweisen Überführung in eine Demontageposition beweglich gelagert ist,
wobei das Werkzeug stirnseitig einen Untergriff (13) zum Eingriff zwischen Kugelpfanne (10) und Sperrelement (12) aufweist,
**dadurch gekennzeichnet, dass** das Werkzeug stirnseitig ferner einen Aufnahmebereich (14) zur Führung des vom Untergriff untergriffenen Sperrelementes (12) in die Demontageposition aufweist.

2. Werkzeug nach Anspruch 1, **dadurch gekennzeichnet, dass** der Aufnahmebereich (14) durch eine quer zur Längsachse (a-a) des Werkzeugs angeordnete Nut gebildet ist, der auf der einen Seite der Untergriff (13) und auf der anderen Seite ein Übergriff (15) benachbart ist.

3. Werkzeug nach Anspruch 1 oder 2, **dadurch gekennzeichnet, dass** Untergriff (13) und/oder Übergriff (15) sich zum vorderen Ende des Werkzeugs hin unter Aufweitung des Aufnahmebereichs (14) verjüngen.

4. Werkzeug nach Anspruch 2 oder 3, **dadurch gekennzeichnet, dass** das zylindrische Werkzeug am Übergriff (15) außenseitig eine geneigte abgeflachte Fläche (16) aufweist.

5. Werkzeug nach einem der vorhergehenden Ansprüche, **dadurch gekennzeichnet, dass** die Außenseite des Untergriffs (13) eine sich parallel zur Längsachse a-a des Werkzeugs erstreckende Abflachung (17) aufweist.
